(19) Europäisches Patentamt

**European Patent Office**

**Office européen des brevets**

(11) Veröffentlichungsnummer: **0 289 857 B1**

(12) **EUROPÄISCHE PATENTSCHRIFT**

(45) Veröffentlichungstag der Patentschrift: **25.03.92**

(51) Int. Cl.⁵: **B29C 45/40**, B29C 45/68

(21) Anmeldenummer: **88106265.7**

(22) Anmeldetag: **20.04.88**

(54) Schliesseinheit an Spritzgiessmaschinen.

(30) Priorität: **04.05.87 DE 3715121**

(43) Veröffentlichungstag der Anmeldung:
**09.11.88 Patentblatt 88/45**

(45) Bekanntmachung des Hinweises auf die
Patenterteilung:
**25.03.92 Patentblatt 92/13**

(84) Benannte Vertragsstaaten:
**AT CH FR GB IT LI NL**

(56) Entgegenhaltungen:
**DE-B- 2 146 147**
**US-A- 4 545 757**

(73) Patentinhaber: **MANNESMANN Aktiengesellschaft**
**Mannesmannufer 2**
**W-4000 Düsseldorf 1(DE)**

(72) Erfinder: **Würl, Ernst**
**Am Galgenfeld 29**
**W-8831 Höttingen(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

## Beschreibung

Die Erfindung betrifft eine Schließeinheit an Spritzgießmaschinen zum Spritzgießen von Kunststoffteilen mit einer zwischen feststehenden Endplatten auf Holmen bewegbar geführten Formaufspannplatte für das Formwerkzeug sowie einem Formschließmechanismus, insbesondere einem hydraulisch betätigten Kniehebelmechanismus sowie mit die Formaufspannplatte in Bewegungsrichtung durchringenden, relativ zur Formaufspannplatte längsbewegbaren Auswerferelementen für die Werkstücke bei geöffneter Form. Eine solche Schließeinheit ist aus der US-A-4 545 757 bekannt.

Es ist bekannt, die Formaufspannplatte für das Formwerkzeug unmittelbar mit dem Bewegungsmechanismus, der vorzugsweise aus einem Kniehebelmechanismus besteht zu verbinden bzw. den Kniehebel dort anzulenken. Zum Auswerfen des spritzgegossenen Werkstücks dienen Auswerfer, die die Formaufspannplatte durchdringen und denen auf der dem Werkzeug abgewandten Seite der Formaufspannplatte Bewegungsmechanismen zugeordnet sind, mit denen mehrere Auswerfer gleichzeitig bewegbar sind. Da abhängig von dem herzustellenden Werkstück stets eine Vielzahl von Auswerfern betätigt werden muß, sind bei bekannten Lösungen die Auswerferelemente auf der dem Bewegungsmechanismus zugewandten Seite mittels einer relativ zur Formaufspannplatte bewegbaren Platte gemeinsam verschiebbar. Das bedeutet, daß eine entsprechend große Auswerferplatte erforderlich ist, deren Hub in Bewegungsrichtung mindestens dem Hub der Auswerfer entspricht. Der Bewegungsmechanismus für die Auswerferplatte ist bei der bekannten Lösung im Bereich des Formschließmechanismusses auf der rückwärtigen Seite der Formaufspannplatte angeordnet. Dieser Bewegungsmechanismus beeinträchtigt jedoch den Verfahrweg der Formaufspannplatte, weil nebem dem Platzbedarf für den Mechanismus noch ausreichend Raum für den Hub der Auswerferplatte vorhanden sein muß.

Ein eingeschränkter Verfahrweg der Formaufspannplatte bedeutet jedoch ein eingeschränkter Öffnungsraum zwischen den Werkzeughälften zum Auswerfen der fertigen Werkstücke.

Der vorliegenden Erfindung liegt die Aufgabe zugrunde, eine Schließeinheit der eingangs beschriebenen Art zu verbessern, in dem der Auswerfermechanismus und dessen Antrieb vereinfacht und der Öffnungshub wesentlich vergrößert wird.

Zur Lösung der Aufgabe wird erfindungsgemäß vorgeschlagen, daß bei einer Schließeinheit der eingangs genannten Art der Formschließmechanismus an eine zwischen der Formaufspannplatte und der Endplatte parallel dazu angeordneten, auf den Holmen geführten Riegelplatte angreifen, an der die Auswerferelemente befestigt sind und der Abstand zwischen der Formaufspannplatte und der Riegelplatte mindestens in zwei Endstellungen einstellbar ist.

Die Erfindung schafft damit eine Konstruktion, mit der die Auswerferfunktion mit der des Werkzeugöffnungshubes kombinierbar wird. Der Werkzeugöffnungsweg wird dadurch größer, daß der Formschließmechanismus nicht mehr an der Formaufspannplatte, sondern an der dazwischen angeordneten Riegelplatte angreift, deren Abstand von der Formaufspannplatte veränderbar ist. Da die Auswerfer an der Riegelplatte befestigt sind und die Formaufspannplatte durchgreifen, können diese bei entsprechendem Abstand zwischen Formaufspannplatte und Riegelplatte innerhalb der Formaufspannplatte zurückgezogen sein und beim Annähern der Formaufspannplatte an die Riegelplatte bis hin zur Anlage an derselben in Auswerferposition gebracht werden, in der sie in ihrer wirksamen Länge die Formaufspannplatte durchdringen. Dadurch, daß die Formaufspannplatte an die Riegelplatte anlegbar ist, wird bei gleichzeitiger Auswerferfunktion der Öffnungshub des Werkzeuges wesentlich vergrößert, ohne daß die Gesamtbaulänge der Maschine wesentlich beeinträchtigt wird.

In einer günstigen Ausgestaltung der Erfindung ist vorgesehen, daß zur Veränderung des Abstandes zwischen der Formaufspannplatte und der Riegelplatte Distanzelemente zwischen diese bringbar sind, deren Distanzlänge mindestens dem wirksamen Hub der Auswerferelemente entspricht. Nach einem Ausgestaltungsmerkmal der Erfindung kann die wirksame Länge der Distanzelemente einstellbar sein.

Diese erfindungsgemäßen Distanzelemente übertragen die hohen Schließkräfte von dem hydraulische betätigten Kniehelbelmechanismus über die Riegelplatte auf die Formaufspannplatte und stellen sicher, daß in Arbeitsposition die Auswerferelemente in der Formaufspannplatte zurückgezogen sind.

In einer günstigen Ausgestaltung wird vorgeschlagen, daß die Distanzelemente an der dem Werkzeug abgewandten Rückseite der Formaufspannplatte befestigt sind und mit ihren freien Enden Durchgangsbohrungen in der Riegelplatte durchdringen, in denen sie verriegelbar sind. Die Verriegelung der formschlüssigen Distanzelemente kann rein mechanisch, ggfs. mit einem automatisierten Mechanismus erfolgen.

Nach einem weiteren Merkaml der Erfindung ist vorgesehen, daß zur Veränderung des Abstandes zwischen der Formaufspannplatte und der Riegelplatte Linearantriebe vorgesehen sind. Derartige Linearantriebe können Kolben-Zylinder-Einheiten sein, die die Formaufsplannplatte gegen die Riegelplatte führen bzw. von dieser entfernen. Mit derartigen Antrieben, die natürlich nicht auf Kolben-Zylinder-Einheiten beschränkt sind, ist ein feinfühliges direktes Abstützen der Schließkräfte beim Schließen des Werkzeuges möglich, so daß Beschädigungen am Werkzeug durch Fremdteile durch extrem niedriger Schließkraft vermeidbar sind.

Günstigerweise können nach einem anderen Merkaml der Erfindung die Linearantriebe in vorgegebenen Verschiebestellungen verriegelbar sein, wodurch die Funktion der Distanzelemente und des Linearantriebes vereinigt werden. Derartige Linearantriebe sind im Handel als Verriegelungszylinder erhältlich.

Ein Ausführungsbeispiel der Erfindung ist in der Zeichnung dargestellt und wird nachfolgend beschrieben. Es zeigt:

Fig. 1 in schematischer Darstellung eine Spritzgießmaschine nach dem Stand der Technik und

Fig. 2 die erfindungsgemäße Hubeinrichtung in ihren beiden Endstellungen.

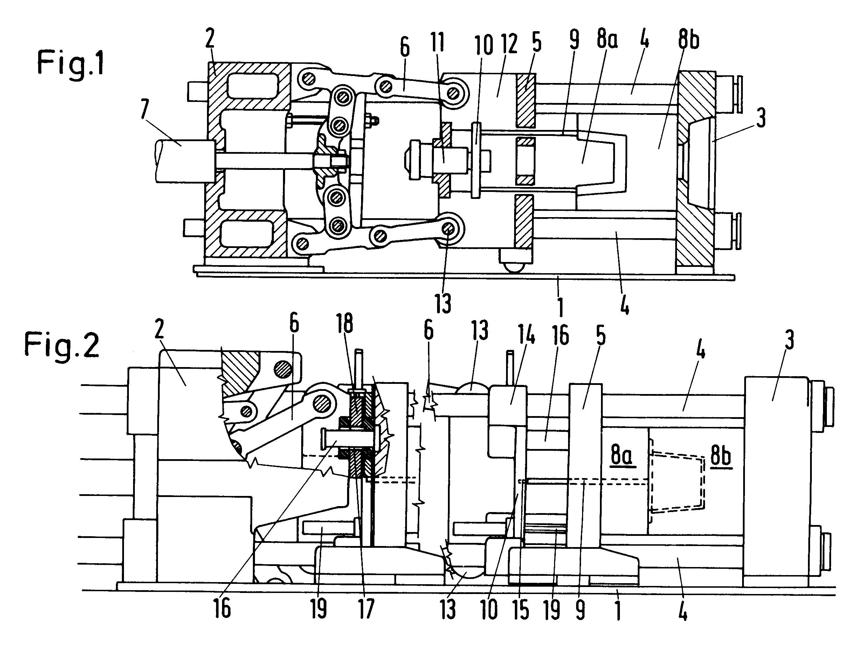

In Figur 1 ist mit 1 das Maschinenbett bezeichnet, auf dem zwischen den beiden mit den Holmen 4 miteinander verbundenen Endplatten 2 und 3, die Formaufspannplatte derartig angeordnet ist, daß sie mit Hilfe des Kniehebelmechanismus 6 auf den Holmen 4 verschiebbar ist. Der Kniehebelmechanismus 6 wird bei 7 hydraulisch betätigt. Auf der Formaufspannplatte 5 ist das aus den Hälften 8a und 8b bestehende Werkzeug befestigt.

Zum Auswerfen fertiger Werkstücke ist ein Auswerfermechanismus vorgesehen, der aus den in der Formaufspannplatte 5 verschiebbar gehaltenen Auswerferelementen (Auswerferbolzen) 9 besteht, die durch eine alle Auswerferelemente verbindende Auswerferplatte 10 synchoronisierend verbunden sind. Die Auswerferplatte 10 steht mit einem Linearantriebe 11, einer Kolben-Zylinder-Einheit in Verbindung, die in einem Rahmenteil 12 angeordnet ist, der gleichzeitig die Distanz zwischen der Formaufspannplatte 5 und den Anlenkpunkten 13 des Schließmechanismus und den Raum für den Bewegungshub der Auswerferplatte 10 überbrückt. Dieser Bewegungshub ist notwendig, um die Auswerferelemente 9 in Längsrichtung durch die Aufspannplatte 5 und die Werkzeughälfte 8a hindurchzustoßen, damit sich das spritzgeprägte Werkstück aus der Form lösen kann. Dies geschieht bei geknicktem Kniehebel 6, also in geöffneter Stellung der Werkzeughälften 8a, 8b.

Wie in der Zeichnung erkennbar, ist der Öffnungshub des Werkzeuges einerseits durch die Kniehebelausbildung und andererseits durch den Auswerfermechanismus und dessen Anordnung begrenzt.

In Figur 2 sind gleiche Teile gleich bezeichnet. Gemäß dem Vorschlag der Erfindung ist jedoch der Formschließmechanismus 6 in Form der Kniehebel nicht mehr an der Formaufspannplatte angelenkt. Die Anlenkpunkte 13 des Kniehebels 6 sind mit einer zwischen der Endplatte 2 und der Formaufspannplatte 5 angeordneten Riegelplatte 14 befestigt, an der außerdem an der der Formaufspannplatte 5 zugewandten Seite die Auswerferelemente 9 bei 15 befestigt sind. Durch Veränderung des Abstandes zwischen der Riegelplatte 14 und der Formaufspannplatte 5 werden die freien Enden der Auswerferelemente 9 durch die Formaufspannplatte 5 und die Werkzeughälfte 8a hindurchbewegt und können somit ihre Auswerferfunktion erfüllen. Zu diesem Zweck müssen die Abstandspositionen zwischen Riegelplatte 14 und Formaufspannplatte 5 veränderbar sein, nämlich in eine Stellung, in der die Auswerferelemente innerhalb der Formaufspannplatte bzw. der Werkzeughälfte 8a zurückgezogen sind und einer Stellung, in der die Werkzeughälfte 8a von den Auswerferelementen durchdrungen ist.

Um diese Positionen einstellen zu können und dabei die Schließkraft übertragen zu können, ist vorgesehen, zwischen Formaufspannplatte 5 und Riegelplatte 14 Distanzelemente 16 zu bringen, deren Länge mindestens der wirksamen Länge des Auswerferhubes entspricht.

Wie in der linken Zeichnungshälfte der Figur 2 in zurückgezogener Stellung der Kniehebel 6 erkennbar, sind die Distanzelemente zylindrisch ausgebildet und einseitig fliegend an der dem Werkzeug 8 abgewandten Seite der Formaufspannplatte befestigt. Die freiein Enden der Distanzelemente 16 durchdringen Durchgangsbohrungen 17 in der Riegelplatte 14, so daß die Formaufspannplatte 5 unmittelbar an die Riegelplatte 14 anlegbar ist, während die Distanzelemente 16 durch die Riegelplatte hindurchgreifen.

In der anderen, rechts in Figur 2 dargestellten Endstellung der Formaufspann- bzw. Riegelplatte 5 bzw. 14 sind die Distanzelemente 16 mindestens teilweise aus der Durchgangsbohrung zurückgezogen, so daß diese durch einen Riegelmechanismus 18 verschlossen werden kann. Dadurch werden die Distanzstück 16 und damit der Abstand zwischen Formaufspannplatte 5 und Riegelplatte 14 festgelegt.

Wie erkennbar, verringert sich bei der erfindungsgemäßen Lösung der beim Stand der Technik (Figur 1) bei 12 dargestellte erforderliche Abstand zwischen den Anlenkpunkten 13 der Kniehebel 6 und der Formaufspannplatte 5 bei entriegelten Distanzelementen 16, so daß dieser ersparte Abstand dem Öffnungshub der Werkzeughäften 8a, 8b zu Gute kommt. Gleichzeitig vereinfacht sich die Konstruktion des Auswerfermechanismus, der mit der Riegelplatte kombiniert ist.

Um die Formaufspannplatte 5 relativ zur Riegelplatte bewegen zu können, sind, wie bei 19 schematisch dargestellt, Linearantriebe in Form von Kolben-Zylinder-Einheiten vorgesehen, mit denen die Formaufspannplatte an die Riegelplatte herangezogen werden kann. Diese Linearantriebe 19 gestatten gleichzeitig ein feinfühliges Schließen des Werkzeuges am Ende des Schließvorganges bei extrem niedrigen Schließkräften, so daß mit den für die Erfindung vorgesehenen Elementen mehrere Vorteile vereint sind.

Distanzelemente 16 und Linearantrieb 19 lassen sich in einem bekannten Bauteil zusammenfassen, das als Verriegelungszylinder auf dem Markt ist. Dieser Verriegelungszylinder ist eine Kolben-Zylinder-Einheit, bei der der Kolben gegenüber dem Zylinder in bestimmten Axialstellungen mechanisch verriegelbar ist.

**Patentansprüche**

1. Schließeinheit an Spritzgießmaschinen zum Spritzgießen von Kunststoffteilen mit einer zwischen feststehenden Endplatten (2, 3) auf Holmen (4) bewegbar geführten Formaufspannplatte (5) für das Formwerkzeug (8a, 8b) sowie einem Formschließmechansimus (6), insbesondere einem hydraulisch betätigten Kniehebelmechanismus sowie mit die Formaufspannplatte (5) in Bewegungsrichtung durchdringenden, relativ zur Formaufspannplatte (5) längsbewegbaren Auswerferelementen (9) für die Werkstücke bei geöffneter Form,
dadurch gekennzeichnet,
daß der Formschließmechanismus (6) an einer zwischen der Formaufspannplatte (5) und der Endplatte (2) parallel dazu angeordneten, auf den Holmen geführten Riegelplatte (14) angreift, an der die Auswerferelemente (9) befestigt sind und der Abstand zwischen der Formaufspannplatte (5) und der Riegelplatte (14) mindestens in zwei Endstellungen einstellbar ist.

2. Schließeinheit nach Anspruch 1,
dadurch gekennzeichnet,
daß zur Veränderung des Abstandes zwischen der Formaufspannplatte (5) und der Riegelplatte (14) Distanzelemente (16) zwischen diese bringbar sind, deren Distanzlänge mindestens dem wirksamen Hub der Auswerferelemente (9) entspricht.

3. Schließeinheit nach Anspruch 2,
dadurch gekennzeichnet,
daß die wirksame Länge der Distanzelemente (16) einstellbar ist.

4. Schließeinheit nach Anspruch 1 bis 3,
dadurch gekennzeichnet,
daß die Distanzelemente (16) an der dem Werkzeug (8a, 8b) abgewandten Rückseite der Formaufspannplatte (5) befestigt sind und mit ihren freien Enden durch Durchgangsbohrungen (17) in der Riegelplatte (14) durchgreifen, in denen sie verriegelbar (18) sind.

5. Schließeinheit nach Anspruch 1 bis 4,
dadurch gekennzeichnet,
daß zur Veränderung des Abstandes zwischen der Formaufspannplatte (5) und der Riegelplatte (14) Linearantriebe (19) vorgesehen sind.

6. Schließeinheit nach Anspruch 1 bis 5,
dadurch gekennzeichnet,
daß die Linearantriebe (19) in vorgegebenen Verschiebestellungen verriebelbar sind.

**Claims**

1. A closing unit for injection-moulding machines for the injection-moulding of plastic parts, having a clamping plate (5) for the mould die (8a, 8b), which plate is movably guided on spars (4) between fixed end plates (2, 3), and also a mould closing mechanism (6), in particular a hydraulically actuated articulated lever mechanism, and also having ejector elements (9) for the workpieces when the mould is opened, which elements penetrate through the clamping plate (5) in the direction of movement and are longitudinally movable relative to the clamping plate (5),
characterised in that
the mould closing mechanism (6) acts on a lock plate (14) which is located between the clamping plate (5) and the end plate (2) and parallel thereto, and is guided on the spars, to which lock plate the ejector elements (9) are attached, and the distance between the clamping plate (5) and the lock plate (14) is adjustable in at least two end positions.

2. A closing unit according to Claim 1,
characterised in that in order to change the distance between the clamping plate (5) and the lock plate (14) spacing elements (16) can be inserted between them, the spacing length of which elements corresponds at least to the effective stroke of the ejector elements (9).

3. A closing unit according to Claim 2,
characterised in that the effective length of the spacing elements (16) is adjustable.

4. A closing unit according to Claims 1 to 3,
characterised in that the spacing elements (16) are attached to the rear side of the clamping plate (5) which is remote from the die (8a, 8b) and their free ends pass through through-bores (17) in the lock plate (14), in which bores they can be locked (18).

5. A closing unit according to Claims 1 to 4, characterised in that linear drives (19) are provided in order to change the distance between the clamping plate (5) and the lock plate (14).

6. A closing unit according to Claims 1 to 5, characterised in that the linear drives (19) can be locked in predetermined displacement positions.

**Revendications**

1. Unité de fermeture pour des machines de moulage par injection de pièces en matière synthétique, comportant un plateau porte-outil (5) pour le moule (8a,8b), guidé, de façon mobile sur des longerons (4) entre des plateaux d'extrémité fixes (2,3), ainsi qu'un mécanisme (6) de fermeture du moule, en particulier un mécanisme à levier coudé actionné hydrauliquement, et des éléments d'éjection (9) pour les pièces lorsque le moule est ouvert, éléments qui sont longitudinalement mobiles par rapport au plateau porte-outil (5) et traversent le plateau porte-outil (5) dans la direction de déplacement,
caractérisée en ce que le mécanisme de fermeture du moule (6) s'engage sur une plaque de verrouillage (14) guidée sur les longerons et agencée entre le plateau porte-outil (5) et la plaque d'extrémité (2) parallèlement à ceux-ci, plaque sur laquelle sont fixés les éléments d'éjection (9), et en ce que la distance entre le plateau porte-outil (5) et la plaque de verrouillage (14) est réglable au moins dans deux positions d'extrémité.

2. Unité de fermeture selon la revendication 1, caractérisée en ce que, pour modifier la distance entre le plateau porte-outil (5) et la plaque de verrouillage (14), des entretoises (16) peuvent être agencées entre ceux-ci, dont la longueur d'entretoisement correspond au moins à la course efficace des éléments d'éjection (9).

3. Unité de fermeture selon la revendication 2, caractérisée en ce que la longueur efficace des entretoises (16) peut être réglée.

4. Unité de fermeture selon les revendications 1 à 3,
caractérisée en ce que les entretoises (16) sont fixées sur l'arrière, opposé à l'outil (8a,8b), du plateau porte-outil (5) et, par leurs extrémités libres, traversent des perçages (17) dans la plaque de verrouillage (14), dans lesquels elles peuvent être verrouillées (18).

5. Unité de fermeture selon les revendications 1 à 4,
caractérisée en ce, que pour modifier la distance entre le plateau porte-outil (5) et la plaque de verrouillage (14), sont prévus des entraînements linéaires (19).

6. Unité de fermeture selon les revendications 1 à 5,
caractérisée en ce que les entraînements linéaires (19) peuvent être verrouillés dans des positions prédéfinies.

Fig.1

Fig.2

EP 0 289 857 B1